# EUROPEAN PATENT APPLICATION

(11) **EP 3 495 715 A1**
(43) Date of publication of application: **12.06.2019**
(21) Application number: 18728300.7
(22) Date of filing: 14.05.2018
(51) Int. Cl.: F21S 9/03, F21V 21/00, F21V 23/00, A01K 79/02

(54) **ILLUMINATING FISH-ATTRACTING DEVICE**

(30) Priority: 12.05.2017 CN 201710333869
(71) Applicant: Qinghai Capital Energy Solar PV Co., Ltd, Qinghai 810600 (CN)
(72) Inventor: XUE, Shiyong, Haidong Qinghai 810600 (CN); ZHANG, Haiming, Haidong Qinghai 810600 (CN); WANG, Yanfu, Haidong Qinghai 810600 (CN); WANG, Minghai, Haidong Qinghai 810600 (CN)
(74) Representative: Casalonga
(86) International application number: PCT/CN2018/086759
(87) International publication number: WO 2018/206013

(57) **Abstract**

A lighting fish attracting device includes a fixed support, a solar panel, a battery, a lamp, and at least one floating member that is configured to float on a water surface when in use. The fixed support and the battery are mounted on the at least one floating member. The solar panel and the lamp are mounted on the fixed support. The battery is connected to the lamp and the solar panel. The lamp is located on a back side of the solar panel, and the back side is configured to face the water surface when in use.

## Description

This application claims priority to Chinese Patent Application No. 201710333869.1, filed on May 12, 2017, titled "A FLOATING SOLAR LIGHTING FISH ATTRACTING DEVICE", which is incorporated herein by reference in its entirety.

### TECHNICAL FIELD

The present disclosure relates to the field of fishery technology, and in particular, to a lighting fish attracting device.

### BACKGROUND

Lighting fish attracting devices are a kind of fish attracting device used at night, which takes advantage of the phototaxis of fish to control them to gather to a designated water area according to the requirements of the operator. Lighting fish attracting devices are commonly used in fishing operations such as fish farming and fishing.

### SUMMARY

Some embodiments of the present disclosure provide a lighting fish attracting device, comprising a fixed support, a solar panel, a battery, a lamp, and at least one floating member that is configured to float on a water surface when in use, wherein
the fixed support and the battery are mounted on the at least one floating member; the solar panel and the lamp are mounted on the fixed support; the battery is connected to the lamp and the solar panel; and the lamp is on the back side of the solar panel, and the back side is configured to face the water surface when in use.

The lighting fish attracting device further comprises at least one cover board, wherein the at least one cover board is disposed on a mounting surface of the at least one floating member in one-to-one correspondence and covers the at least one floating member.

In some embodiments, each of the at least one cover board is a PC board.

The fixed support and the battery are mounted on the at least one floating member in one-to-one correspondence through the at least one cover board.

In some embodiments, the at least one floating member comprises one floating member, and a through window is provided in the one floating member; and
the lamp is located above the window; or
the lamp is configured to be submerged in water when in use, and the lamp is located below the window.

In some embodiments, the at least one floating member comprises at least two floating members; the at least two floating members enclose a space serving as a through window, and the fixed support is mounted on the at least two floating members; and
the lamp is located above the window; or
the lamp is configured to be submerged in water when in use, and the lamp is located below the window.

In some embodiments, each of the at least one floating member is a foam, a PC bucket, or a floating bucket.

In some embodiments, each of the at least one floating member is a water-proof foam.

In some embodiments, the at least one floating member comprises at least two floating members; the battery is disposed on a surface of one floating member of the at least two floating members, and a volume of the one floating member is greater than a volume of each of at least one remaining floating member of the at least two floating members.

In some embodiments, the lighting fish attracting device further comprises a position fixing member, wherein the position fixing member is connected to the fixed support, and is configured to fix the fixed support onto the water surface when in use.

In some embodiments, the fixed support comprises a plurality of base frames, a plurality of cross beams and a plurality of vertical bars, and axis directions of the plurality of vertical bars are perpendicular to the mounting surface of the at least one floating member. The mounting surface of the at least one floating member comprises a plurality of first edges extending in a first direction and a plurality of second edges extending in a second direction, the first direction being different from the second direction;
each of the plurality of base frames wraps a corresponding first edge among the plurality of first edges in a one-to-one correspondence; a extending direction of the plurality of cross beams is the same as the second direction, and each of the plurality of cross beams is fixed on the plurality of base frames; a bottom end of each of the plurality of vertical bars is fixed on a corresponding base frame of the plurality of base frames in a one-to-one correspondence, and the solar panel is mounted on top ends of the plurality of vertical bars;
the position fixing member comprises at least one rope and at least one pulling net that is connected in one-to-one correspondence to one end of the at least one rope; an opposite end of the at least one rope is connected to a corresponding base frame of the plurality of base frames in a one-to-one correspondence.

In some embodiments, the fixed support further comprises a lamp hanger and an upper frame disposed on the plurality of vertical bars; the lamp hanger is disposed on the upper frame, and the lamp is fixed on the lamp hanger.

In some embodiments, each of the plurality of vertical bars has a first fixing surface and a second fixing surface; the first fixing surface is perpendicular to the second direction, and the second fixing surface is perpendicular to the first direction;
the fixed support further comprises a lateral diagonal bracing disposed on the first fixing surface; an upper end of the lateral diagonal bracing is connected to the first fixing surface, and a lower end of the lateral diagonal bracing is connected to one of the plurality of base frames;
the mounting surface of the floating member, the lateral diagonal bracing and one corresponding vertical bar of the plurality of vertical bars constitute a lateral triangular support structure;
the fixed support further comprises a longitudinal diagonal bracing disposed on the second fixing surface; an upper end of the longitudinal diagonal bracing is connected to the second fixing surface; a lower end of the longitudinal diagonal bracing is connected to one of the plurality of base frames, and the base frame, the longitudinal diagonal bracing and the vertical bar constitute a longitudinal triangular support structure.

In some embodiments, each of the plurality of vertical bars also has a cross bar that is configured to connect two adjacent vertical bars of the plurality of vertical bars.

In some embodiments, one of the plurality of vertical bars is in contact with one of the plurality of cross beams.

In some embodiments, the battery is mounted on one of the at least one floating member via the battery holder, and the battery holder is affixed to a base frame that wraps a first edge of a floating member of the at least one floating member.

In some embodiments, a panel surface of the solar panel is parallel to a mounting surface of each of the at least one floating member; or
an angle between the panel surface of the solar panel and the mounting surface of each of the at least one floating member is greater than 0° and less than 90°.

In some embodiments, the lamp is a DC lamp and the battery is a lithium-ion battery.

In some embodiments, an output voltage of the battery is a DC voltage of 12V. The lamp is an LED lamp having a rated voltage of 12V, a power of 50W, and luminous flux of 110-120 lumens.

In some embodiments, the battery comprises a rechargeable battery and a controller for controlling the rechargeable battery; an input end of the rechargeable battery is connected to the solar panel, while an output end of the rechargeable battery is connected to the lamp;
the controller is configured to control the rechargeable battery to charge the lamp when a light intensity is less than or equal to a light intensity threshold, and control the rechargeable battery to stop charging the lamp when the light intensity is greater than the light intensity threshold.

In some embodiments, the controller is further configured to set a power supply strategy for the rechargeable battery to supply power to the lamp, and the power supply strategy includes a power supply duration and/or power supply power.

In some embodiments, the controller is configured to delay t1 of time before controlling the rechargeable battery to charge the lamp when the light intensity is less than or equal to the light intensity threshold, and delay t2 of time before controlling the rechargeable battery to stop charging the lamp when the light intensity is greater than the light intensity threshold.

In some embodiments, the battery further comprises a display connected to the controller;
the controller is configured to test a battery voltage of the rechargeable battery and/or a photovoltaic voltage of the solar panel, and
the display is configured to display the battery voltage of the rechargeable battery and/or the photovoltaic voltage of the solar panel when the battery voltage of the rechargeable battery and/or the photovoltaic voltage of the solar panel are being tested.

In some embodiments, the lighting fish attracting device further comprises a remote control terminal that is wirelessly connected to the controller and configured to wirelessly control the controller.

### BRIEF DESCRIPTION OF THE DRAWINGS

The accompanying drawings described herein are used to provide further understanding of the present disclosure and constitute a part of the disclosure. The illustrative embodiments and the description thereof serve to explain the present disclosure, but do not constitute improper limitations to the disclosure. In the accompanying drawings:
FIG. 1 is a schematic structural view of a lighting fish attracting device according to some embodiments of the present disclosure;
FIG. 2 is a schematic side view of another lighting fish attracting device according to some embodiments of the present disclosure;
FIG. 3 is a schematic structural view of another lighting fish attracting device according to some embodiments of the present disclosure;
FIG. 4 is a schematic side view of another lighting fish attracting device according to some embodiments of the present disclosure;
FIG. 5 is a schematic view of a mounting structure in which a fixed support is mounted on at least one floating member according to some embodiments of the present disclosure; and
FIG. 6 is a structural block diagram of a battery according to some embodiments of the present disclosure.

### DETAILED DESCRIPTION

In order to make the purpose, technical solutions and advantages of the present disclosure more clear, the technical solutions in the present disclosure will be described clearly and completely below with reference to the accompanying drawings of the embodiments of the present disclosure. Obviously, the described embodiments are merely some but not all of the embodiments of the present disclosure. All other embodiments obtained on the basis of the embodiments of the present disclosure by a person of ordinary skill in the art without paying any creative effort shall be included in the protection scope of the present disclosure.

In the related art, lighting power used by the lighting fish attracting device is provided by a generator or a municipal power grid via a cable, and the voltage of the lighting power is 220V. When attracting fish at night, operators set the lighting fish attracting device in a designated water area, and then uses the 220V power to control a lamp included in the lighting fish attracting device to emit light so that fishes that like light (such as small whitebait) gradually gather to the designated water area under the lure of the light from the lamp, and thus the purpose of attracting fish is achieved. However, as the lighting fish attracting device is operated in an open-air, high-humidity environment, the cable is often exposed to wind and sunlight, which makes the aging of the cable very serious. Once the cable has a problem of electric leakage, it will pose a threat to the life safety of the operators. In addition, most of the operators use generators to generate electricity to provide power for the lighting fish attracting device. However, the generators not only consume a lot of resources, but their main bodies are almost scrapped after one year of use, resulting in huge power generation costs. Although a small number of operators use the municipal power grid to provide power for the lighting fish attracting device via cables, the aging speed of cables in an open-air, high-humidity environment is relatively fast. Therefore, it is necessary to replace the cables frequently to ensure that the municipal power grid normally provides lighting power for the lighting fish attracting device. Moreover, when using the municipal power grid to provide lighting power for the lighting fish attracting device via cables, the cables are relatively long, and if one cable fails, it would take a large amount of manpower, material resources and financial resources to find the position of the failure, which leads to increased maintenance costs. In the meantime, due to the fact that the municipal power grid is unmovable, the operating location of the lighting fish attracting device will be limited, and it is not possible to flexibly select the operating location of the lighting fish attracting device. In addition, the method of using generators to provide lighting power for the lighting fish attracting device will result in the waste of a lot of resources and does not meet the environmental protection requirements.

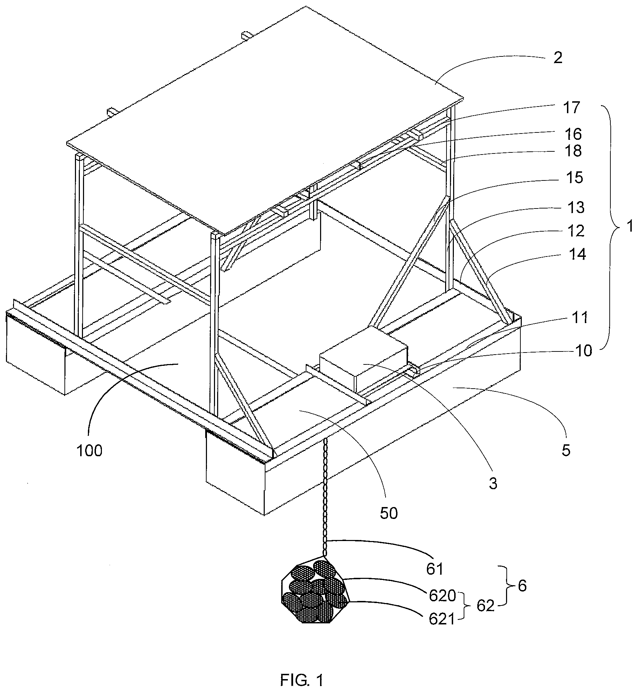

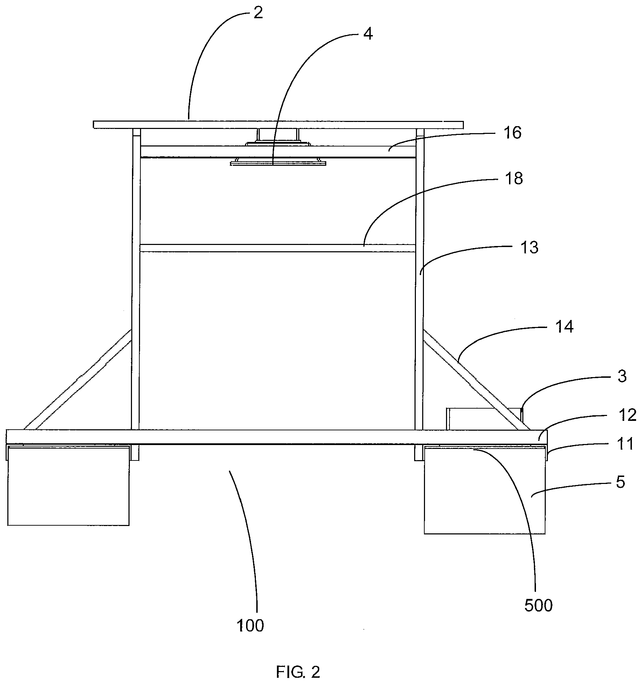

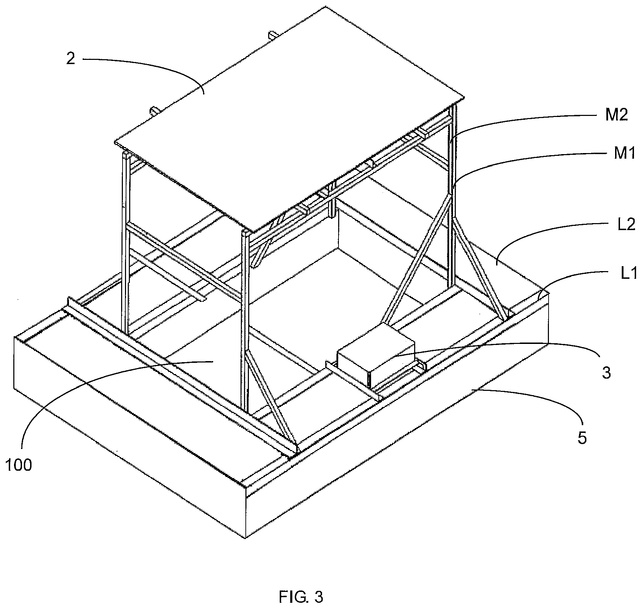

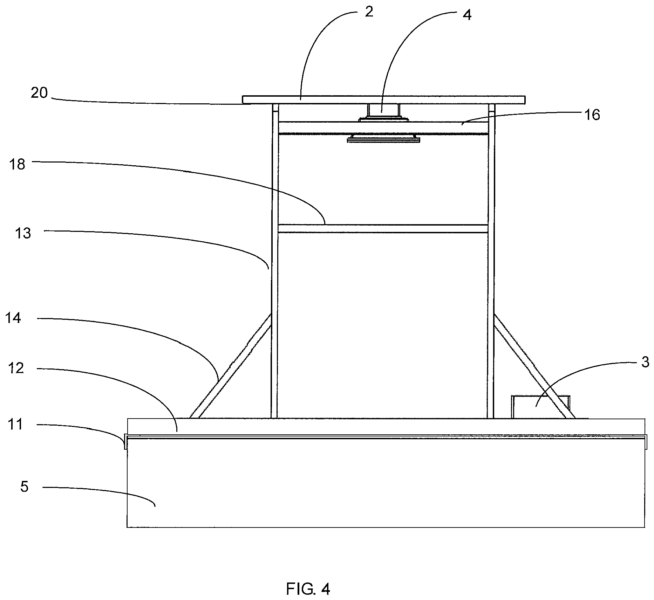

In response to the above problems, some embodiments of the present disclosure provide a lighting fish attracting device. As shown in FIG. 1 to FIG. 4, the lighting fish attracting device comprises a fixed support 1, a solar panel 2, a battery 3, a lamp 4, and at least one floating member 5 configured to float on a water surface when in use. The fixed support 1 and the battery 3 are mounted on the at least one floating member 5. The solar panel 2 and the lamp 4 are mounted on the fixed support 1. The battery 3 is connected to the lamp 4 and the solar panel 2. The lamp 4 is located on a back side 20 of the solar panel 2, which is configured to face the water surface when in use.

The lighting fish attracting device provided by the embodiments of the present disclosure is put into the designated water area before use, with the at least one floating member 5 floating on the water surface. The back side 20 of the solar panel 2 faces the water surface, while a bright side of the solar panel 2 faces away from the water surface, so that the solar panel 2 of the lighting fish attracting device converts solar energy into electrical energy during the day. The electrical energy is stored by the battery 3. When the lighting fish attracting device is used at night, the battery 3 supplies the stored electric energy to the lamp 4, so that the lamp 4 emits a bright light to illuminate the designated water area, so that fish will gradually gather to the designated water area.

According to the structure and the use process of the lighting fish attracting device, the fixed support 1 and the battery 3 are mounted on the at least one floating member 5, and the solar panel 2 and the lamp 4 are mounted on the fixed support 1, so that the at least one floating member 5 directly supports the fixed support 1 and the battery 3, and indirectly supports the solar panel 2 and the lamp 4 through the fixed support 1. While being supported by the at least one floating member 5, the fixed support 1, the battery 3, the solar panel 2 and the lamp 4 also put some pressure on the at least one floating member 5, guaranteeing that the at least one floating member 5 floats stably on the water surface without tipping or being blown away by the wind. Moreover, since the solar panel 2, the lamp 4, and the battery 3 are mounted on the at least one floating member 5, when the battery 3, the solar panel 2 and the lamp 4 move as the fish attracting water area where the at least one floating member 5 is located moves, the battery 3 may provide electrical energy to the lamp 4 free from geographical restrictions, thereby expanding the scope of use of the lighting fish attracting device. Therefore, in the lighting fish attracting device, as the solar battery panel 2 and the storage battery 3 are used in combination to supply power to the lamp 4, the lighting fish attracting device has the advantages of convenient power supply, easy transportation from location to location, convenient maintenance, and low use cost. In the meantime, since the solar panel 2 converts solar energy into electrical energy during the day and stores the electrical energy in the battery 3, the lamp 4 may use the electricity stored in the battery 3 to provide the required illumination for attracting fish at night. As such, the lighting fish attracting device does not waste any non-renewable energy for lighting and does not cause any pollution to the water body.

In addition, in the lighting fish attracting device, as the solar panel 2 converts solar energy into electric energy during the day and stores the electric energy in the battery 3, the battery voltage output by the battery 3 is lower than that provided by a generator or a municipal power grid. With this arrangement, even if electric leakage occurs on the cable between the battery 3 and the lamp 4, and/or the cable between the battery 3 and the solar panel 2, it will not cause any harm to the operators.

In some embodiments, the fixed support 1 is made of aluminum alloy to strengthen the support of the fixed support 1 to the solar panel 2. Of course, the fixed support 1 can also be made of other high-strength metals or alloys.

In some embodiments, as shown in FIGS. 1-4, the lighting fish attracting device further comprises at least one cover board 50. The at least one cover board 50 is disposed on a mounting surface 500 of the at least one floating member 5 in one-to-one correspondence and covers the at least one floating member 5, so that the floating member 5 is protected by the cover board 50. In this way, not only the service life of the floating member 5 is increased, the floating stability of each floating member 5 in the at least one floating member 5 on the water surface is but also improved. There are many kinds of cover board 50, such as a PC board or a foam board.

In some embodiments, the fixed support 1 and the battery 3 are mounted on the at least one floating member 5 through the at least one cover board 50. In this way, the fixed support 1 and the battery 3 may press the cover board 50 against a surface of the at least one floating member 5 so as to ensure that the at least one cover board 50 may be stably mounted on the at least one floating member 5 in a one-to-one correspondence.

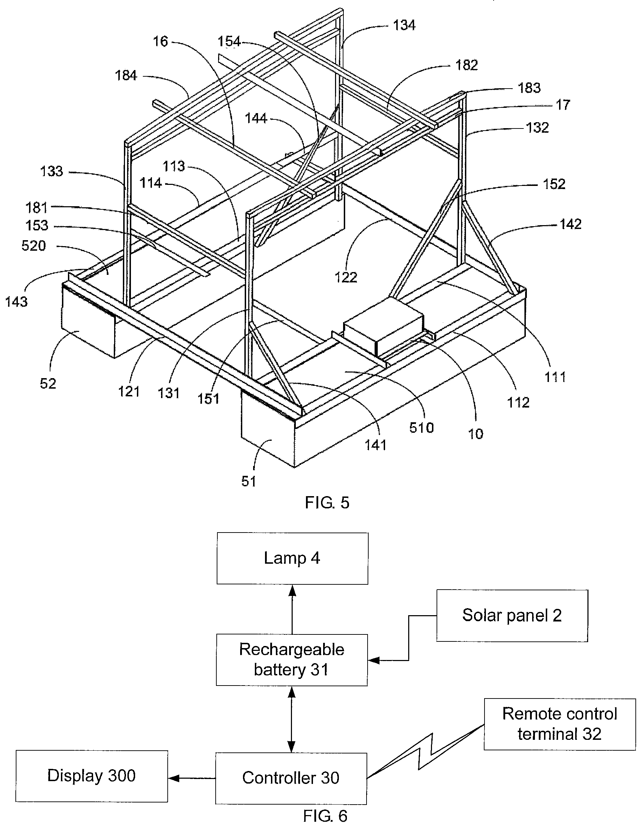

In some embodiments, the number of the floating member 5 included in the lighting fish attracting device is set according to actual conditions. In some embodiments, the at least one floating member 5 comprises one floating member 5, and a through window 100 is provided in the floating member 5. In some other embodiments, the at least one floating member 5 comprises at least two floating members 5 that enclose a space that serves as a through window 100, and the fixed support 1 is mounted on the at least two floating members 5. In some examples, as shown in FIGS. 1 and 5, the at least one floating member 5 comprises two floating members 5, which are a first floating member 51 and a second floating member 52 respectively. Between the first floating member 51 and the second floating member 52, there is a space serving as the through window 100. The fixed support 1 is mounted on the first floating member 51 and the second floating member 52, and the first floating member 51 and the second floating member 52 are combined into a floating body to form a double-hulled floating member.

In some embodiments, under a circumstance that the at least one floating member 5 comprises at least two floating members 5, the battery 3 is disposed on a surface of one floating member 5 of the at least two floating members 5, and a volume of the one floating member 5 is greater than a volume of each of at least one remaining floating member 5 in the at least two floating members 5. In this manner, when the lighting fish attracting device is in use, the draft depth of the one floating member 5 may be kept the same as the draft depth of the at least one remaining floating member 5 of the at least two floating members 5, so that the floating member 5 may stably support the fixed support 1, the battery 3, the solar panel 2 and the lamp 4. It will be understood that, when the lighting fish attracting device is used at night, the position of the through window 100 in the water body is where fish gather.

In some embodiments, the lamp 4 is located above the window 100. In this manner, when the lighting fish attracting device is used at night, the lamp 4 is located above the water surface, and the light emitted by the lamp 4 can reach the water surface through the window 100, so that fish will gather, which will facilitate the rearing or fishing operations of the operators. In some other embodiments, the lamp 4 is located below the window 100 and is configured to be submerged in water when in use. In this way, when the lighting fish attracting device is used at night, the bright light emitted by the lamp 4 illuminates the water body, so that the fish are better gathered, which will facilitate the rearing or fishing operations of the operators.

In some embodiments, each of the at least one floating member 5 is a foam, a PC bucket or a floating bucket, so that the floating member 5 has a good buoyancy, and it is convenient to obtain the materials for making the floating member 5. In some examples, the foam is water-resistant foam, such as rigid waterproof foam or compact waterproof foam.

In some embodiments, as shown in FIGS. 1 to 5, the fixed support 1 comprises a plurality of base frames 11, a plurality of cross beams 12, and a plurality of vertical bars 13. Axial directions of the plurality of vertical bars 13 are perpendicular to the mounting surface 500 of the at least one floating member 5. The mounting surface 500 of the at least one floating member 5 comprises a plurality of first edges L1 extending in a first direction and a plurality of second edges L2 extending in a second direction, and the first direction and the second direction are different.

Each of the plurality of base frames 11 wraps a corresponding first edge L1 of the plurality of first edges L1 in a one-to-one correspondence. An extending direction of the plurality of cross beams 12 is the same as the second direction, and one of the plurality of cross beams 12 is fixed on the plurality of base frames 11. A bottom end of each vertical bar 13 of the plurality of vertical bars 13 is fixed onto a corresponding base frame of the plurality of base frames 11 in a one-to-one correspondence. The solar panel 2 is mounted on top ends of the plurality of vertical bars 13 so that the base frame 11 serves as a base of the plurality of vertical bars 13 to support the solar panel 2.

In some embodiments, as shown in FIG. 1, the lighting fish attracting device further comprises a position fixing member 6. The position fixing member 6 is connected to the fixed support 1 and is configured to fix the fixed support 1 onto the water surface when in use. In this way, the position fixing member has an anchor-like function, thereby further preventing the floating member 5 from being blown away by the wind.

In some embodiments, as shown in FIG. 1, the position fixing member 6 comprises at least one rope 61 and at least one pulling net 62, which is connected in one-to-one correspondence to one end of the at least one rope 61. The other end of the at least one rope is connected to a corresponding base frame in the plurality of base frames 11 in a one-to-one correspondence. The pulling net 62 comprises a net 620 with a built-in weight 621. The weight 621 is, for example, an object such as a rock, a metal block (such as a lead block, an iron block), and the like. When using the lighting fish attracting device, the pulling net is sunk in water and connected to the base frame 11 by the rope, so that the base frame 11 can be fixed to the water surface. Since the base frames 11, the vertical bars 13, and the cross beams 12 are connected to each other to form the fixed support 1 and are mounted onto the floating member 5, the position fixing member 6 will indirectly and stably fix the at least one floating member 5 onto the water surface when in use, so as to prevent the at least one floating member 5 from drifting on the surface of the water.

In some embodiments, each of the plurality of vertical bars 13 has a first fixing surface M1 and a second fixing surface M2. The first fixing surface M1 is perpendicular to the second direction, and the second fixing surface M2 is perpendicular to the first direction. The fixed support 1 further comprises a lateral diagonal bracing 14 provided on the first fixing surface M1. An upper end of the lateral diagonal bracing 14 is connected to the first fixing surface M1, and a lower end of the lateral diagonal bracing 14 is connected to one of the plurality of base frames 11. The mounting surface 500 of the floating member 5, the lateral diagonal bracing 14, and one corresponding vertical bar of the plurality of vertical bars 13 constitute a lateral triangular support structure. The fixed support 1 further comprises a longitudinal diagonal bracing 15 disposed on the second fixing surface M2. An upper end of the longitudinal diagonal bracing 15 is connected to the second fixing surface M2, and a lower end of the longitudinal diagonal bracing 15 is connected to one base frame 11 of the plurality of base frames 11. The one base frame 11, the longitudinal diagonal bracing 15, and the vertical bar 13 constitute a longitudinal triangular support structure. In this way, the vertical bars 13 and the base frames 11 may be fixed by the lateral triangular support structure and the longitudinal triangular support structure, so that the fixed support 1 comprising the vertical bars 13 and the base frames 11 has a good structural strength and stability, so that it has a good strength to support the solar panel 2 and is not easily overturned even when a large wind blows.

In some embodiments, the lower ends of the lateral diagonal bracings 14 is also in contact with the cross beams 12, so that the cross beams 12 provide a certain lateral support for the lateral diagonal bracings 14, so as to prevent the lateral diagonal bracings 14 from tilting, which will affect the support of the lateral diagonal bracings 14 to the vertical bars 13 and the base frames 11.

In some embodiments, the fixed support 1 further comprises a cross bar 18 for connecting two adjacent vertical bars 13 in the plurality of vertical bars 13. In this way, the plurality of vertical bars 13 may have good stability, thereby further improving the structural strength and stability of the fixed support 1 which comprises the plurality of vertical bars 13.

In some embodiments, one vertical bar 13 of the plurality of vertical bars 13 is in contact with one cross beams 12 of the plurality of cross beams 12. In this manner, the one cross beam 12 provides a certain lateral support for the one vertical bar 13, so as to prevent the vertical bar 13 from tilting and guarantee the stability of the support of the vertical bar 13 to the solar panel 2.

In some embodiments, the battery 3 is mounted on one of the at least one floating member 5 via a battery holder, and the battery holder is fixed to a base frame 11 that wraps the first edge L1 of the one of the at least one floating member 5. In this manner, the battery holder is provided on the base frame 11 not only as a mounting member of the battery 3, but also as a fixing member of the fixed support 1.

In some embodiments, the solar panel 2 is mounted on the top ends of the plurality of vertical bars 13 in a horizontal or inclined manner. In other words, in some examples, a panel surface of the solar panel 2 is parallel to the mounting surface 500 of each floating member 5 in the at least one floating member 5. In some other examples, an angle between the panel surface of the solar panel 2 and the mounting surface 500 of each of the at least one floating member 5 is greater than 0° and less than 90°.

In some embodiments, as shown in FIG. 1 to FIG. 4, the fixed support 1 further comprises a lamp hanger 16 and an upper frame 17 disposed on the plurality of vertical bars 13. The upper frame 17 is close to the back side 20 of the solar panel 2, and is away from the plurality of base frames 11. The lamp hanger 16 is disposed on the upper frame 17, and the lamp 4 is fixed on the lamp hanger 16, so that the lamp 4 is suspended below the back side 20 of the solar panel 2. In this way, the solar panel 2 may be used as an umbrella for the lamp 4 to prevent the lamp 4 from being exposed to the sun and rain for a long time, thereby extending the service life of the lamp 4. The mounting position of the upper frame 17 can be decided according to the actual situation. For example, the upper frame 17 is close to the back side 20 of the solar panel 2, and is away from the mounting surface 500 of the floating member 5.

In some embodiments, as shown in FIG. 1 to FIG. 5, the lighting fish attracting device comprises two floating members 5, a fixed support 1, a battery 3, a solar panel 2 and a lamp 4. The two floating members 5 are a first floating member 51 and a second floating member 52. Both the first floating member 51 and the second floating member 52 have a cuboid structure, and there is a space, which serves as the through window 100, between the first floating member 51 and the second floating member 52. The first floating member 51 and the second floating member 52 each comprises two first edges L1 and two second edges L2. The two first edges L1 extend along the length direction of the cuboid, and the two second edges L2 extend along the width direction of the cuboid. A first cover board 510 covering the first floating member 51 is disposed on the mounting surface 500 of the first floating member 51, and a second cover board 520 covering the second floating member 52 is disposed on the mounting surface 500 of the second floating member 52.

In some examples, the fixed support 1 comprises four base frames 11, two cross beams 12, four vertical bars 13, four lateral diagonal bracings 14, four longitudinal diagonal bracings 15, one upper frame 17, four cross bars 18, one lamp hanger 16 and a battery holder 10. The four base frames 11 comprise a first base frame 111, a second base frame 112, a third base frame 113, and a fourth base frame 114. The first base frame 111 and the second base frame 112 wrap the two first edges L1 of the first floating member 51 in one-to-one correspondence, while the third base frame 113 and the fourth base frame 114 wrap the two first edges L1 of the second floating member 52 in one-to-one correspondence. The battery holder 10 is disposed on the first base frame 111 and the second base frame 112, and is connected to the first base frame 111 and the second base frame 112. The battery holder 10 is mounted with a battery 3, which is connected to the solar panel 2 and the lamp 4.

In some examples, the two cross beams 12 comprise a first cross beam 121 and a second cross beam 122. The first cross beam 121 connects one of the two second edges L2 of the first floating member 51 and one of the two second edges L2 of the second floating members 52. One of the two second edges L2 of the first floating member 51 and one of the two second edges L2 of the second floating member 52 extend in the same direction. The second cross beam 122 connects the other one of the two second edges L2 of the first floating member 51 and the other one of the two second edges L2 of the second floating member 52. The other one of the two second edges L2 of the first floating member 51 and the other one of the two second edges L2 of the second floating member 52 extend in the same direction.

In some examples, each of the four vertical bars 13 comprises a first fixing surface M1 and a second fixing surface M2. The first fixing surface M1 is perpendicular to the width direction of the cuboid, and the second fixing surface M2 is perpendicular to the length direction of the cuboid. The four vertical bars 13 comprise a first vertical bar 131, a second vertical bar 132, a third vertical bar 133, and a fourth vertical bar 134.

In some examples, the first base frame 111 is close to the space between the two floating members, while the second base frame 112 is away from the space between the two floating members. A bottom end of the first vertical bar 131 and a bottom end of the second vertical bar 132 are fixed on the first base frame 111; the bottom end of the first vertical bar 131 is in contact with the first cross beam 121, and the bottom end of the second vertical bar 132 is in contact with the second cross beam 122. The third base frame 113 is close to the space between the two floating members, while the fourth base frame 114 is away from the space between the two floating members. A bottom end of the third vertical bar 133 and a bottom end of the fourth vertical bar 134 are fixed on the third base frame 113; the bottom end of the third vertical bar 133 is in contact with the first cross beam 121, and the bottom end of the fourth vertical bar 134 is in contact with the second cross beam 122. The solar panel 2 is disposed on a top end of the first vertical bar 131, a top end of the second vertical bar 132, a top end of the third vertical bar 133, and a top end of the fourth vertical bar 134. The first vertical bar 131, the second vertical bar 132, the third vertical bar 133, and the fourth vertical bar 134 are connected together by the upper frame 17. The lamp hanger 16 is mounted on the upper frame 17, and the lamp 4 is fixed on the lamp hanger 16.

In some examples, the four lateral diagonal bracings 14 comprise a first lateral diagonal bracing 141, a second lateral diagonal bracing 142, a third lateral diagonal bracing 143, and a fourth lateral diagonal bracing 144. The four longitudinal diagonal bracings 15 comprise a first longitudinal diagonal bracing 151, a second longitudinal diagonal bracing 152, a third longitudinal diagonal bracing 153, and a fourth longitudinal diagonal bracing 154. The four cross bars 18 comprise a first cross bar 181, a second cross bar 182, a third cross bar 183, and a fourth cross bar 184.

In some examples, the first fixing surface M1 of the first vertical bar 131 is connected to an upper end of the first lateral diagonal bracing 141. An lower end of the first lateral diagonal bracing 141 is connected to the second base frame 112, and the lower end of the first lateral diagonal bracing 141 is also in contact with the first cross beam 121. The mounting surface 500 of the first floating member 51, the first lateral diagonal bracing 141, and the first vertical bar 131 constitute a first lateral triangular support structure. The second fixing surface M2 of the first vertical bar 131 is connected to an upper end of the first longitudinal diagonal bracing 151, and a lower end of the first longitudinal diagonal bracing 151 is connected to the first base frame 111. The first vertical bar 131, the first longitudinal diagonal bracing 151, and the first base frame 111 constitute a first longitudinal triangular support structure. The first fixing surface M1 of the second vertical bar 132 is connected to an upper end of the second lateral diagonal bracing 142. A lower end of the second lateral diagonal bracing 142 is connected to the second base frame 112, and the lower end of the second lateral diagonal bracing 142 is also in contact with the second cross beam 122. The mounting surface 500 of the first floating member 51, the second lateral diagonal bracing 142, and the second vertical bar 132 constitute a first lateral triangular support structure. The second fixing surface M2 of the second vertical bar 132 is connected to an upper end of the second longitudinal diagonal bracing 152. A lower end of the second longitudinal diagonal bracing 152 is connected to the first base frame 111, and the second vertical bar 132, the second longitudinal diagonal bracing 152 and the first base frame 111 constitute a second longitudinal triangular support structure. The first fixing surface M1 of the third vertical bar 133 is connected to an upper end of the third lateral diagonal bracing 143. A lower end of the third lateral diagonal bracing 143 is connected to the fourth base frame 114, and the lower end of the third lateral diagonal bracing 143 is also in contact with the first cross beam 121. The mounting surface 500 of the second floating member 52, the third lateral diagonal bracing 143, and the third vertical bar 133 constitute a third lateral triangular support structure. The second fixing surface M2 of the third vertical bar 133 is connected to an upper end of the third longitudinal diagonal bracing 153. A lower end of the third longitudinal diagonal bracing 153 is connected to the third base frame 113, and the third vertical bar 133, the third longitudinal diagonal bracing 153 and the third base frame 113 constitute a third longitudinal triangular support structure. The first fixing surface M1 of the fourth vertical bar 134 is connected to an upper end of the fourth lateral diagonal bracing 144. A lower end of the fourth lateral diagonal bracing 144 is connected to the fourth base frame 114. The lower end of the fourth lateral diagonal bracing 144 is also in contact with the second cross beam 122, and the mounting surface 500 of the second floating member 52, the fourth lateral diagonal bracing 144 and the fourth vertical bar 134 constitute a fourth lateral triangular support structure. The second fixing surface M2 of the fourth vertical bar 134 is connected to an upper end of the fourth longitudinal diagonal bracing 154. A lower end of the fourth longitudinal diagonal bracing 154 is connected to the third base frame 113, and the fourth vertical bar 134, the fourth longitudinal diagonal bracing 154 and the third base frame 113 constitute a fourth longitudinal triangular support structure.

In some examples, the first vertical bar 131 and the third vertical bar 133 are connected by the first cross bar 181; the second vertical bar 132 and the fourth vertical bar 134 are connected by the second cross bar 182; a top end of the first vertical bar 131 and a top end of the second vertical bar 132 are connected by the third cross bar 183; and a top end of the third vertical bar 133 and a top end of the fourth vertical bar 134 are connected by the fourth cross bar 184.

In some embodiments, the lamp 4 is a DC lamp, and the battery 3 is a lithium-ion battery. For example, the output voltage of the battery 3 is a DC voltage of 12V, and the lamp 4 is an LED lamp having a rated voltage of 12V, a power of 50W, and luminous flux of 110-120 lumens. In this way, electricity may be supplied directly to the lamp 4 without an inverter, thereby reducing the cost of fish attraction. In addition, even if the optical cable used by the lamp 4 has a problem of electric leakage, the 12V voltage will not pose a risk of electric shock.

In some embodiments, the battery 3 comprises a rechargeable battery 31 and a controller 30 that controls the rechargeable battery 31. An input end of the rechargeable battery 31 is connected to the solar panel 2, and an output end of the rechargeable battery 31 is connected to the lamp 4. The controller 30 is configured to control the rechargeable battery 31 to charge the lamp 4 when the light intensity is less than or equal to a light intensity threshold, and control the rechargeable battery 31 to stop charging the lamp 4 when the light intensity is greater than the light intensity threshold.

In some embodiments, the controller 30 is further configured to set a power supply strategy for the rechargeable battery 31 to supply power to the lamp 4. The power supply strategy includes a power supply duration and/or power supply power, so that the lighting is controllably ensured in the best condition when attracting fish.

In order to avoid the problem of light intensity error, in some embodiments, the controller 30 is configured to delay t1 of time (e.g., 10s) before controlling the rechargeable battery 31 to charge the lamp when the light intensity is less than or equal to the light intensity threshold, and delay t2 of time (e.g., 3min) before controlling the rechargeable battery to stop charging the lamp when the light intensity is greater than the light intensity threshold.

In some embodiments, the battery 3 further comprises a display 300 connected to the controller 30. The controller 30 is also configured to test a battery voltage of the rechargeable battery 31 and/or a photovoltaic voltage of the solar panel 2, and the display 300 is configured to display the battery voltage of the rechargeable battery 31 and/or the photovoltaic voltage of the solar panel 2 when the battery voltage of the rechargeable battery 31 and/or the photovoltaic voltage of the solar panel 2 are being tested.

In some embodiments, the controller 30 is a manual controller having a button for setting a power supply strategy. The operator inputs the power supply strategy into the manual controller through the button, so that the manual controller supplies power to the lamp according to the power supply strategy.

In some embodiments, the lighting fish attracting device further comprises a remote control terminal 32 that is wirelessly connected to the controller 30 and configured to wirelessly control the controller 30, so as to enable unattended intelligent fishing operations. In some examples, the remote control terminal 32 is a mobile terminal such as a remote control panel, a mobile phone, and a tablet computer. In some examples, the remote control terminal 32 is an immobile terminal such as a desktop computer. When in use, the remote control terminal 32 is used to set the power supply strategy, and wirelessly transmit the power supply strategy to the controller 30, so that the controller 30 can implement the power supply strategy. If the remote control terminal 32 has a display screen, the power supply strategy set by the remote control terminal 32 can also be displayed on the display screen. In some embodiments, the remote control terminal 32 controls at least one controller 30 for parameter setting.

In some embodiments, the controller 30 and the remote control terminal 32 are both executed by a microprocessor programmed to perform one or more of the operations and/or functions described herein. In some embodiments, the controller 30 is executed in whole or in part by specially configured hardware (e.g., by one or more application-specific integrated circuits or ASICs).

The embodiments of the present disclosure are described in a progressive manner. As for the same or similar parts among the embodiments, reference may be made to each other. In the description of each embodiment, emphasis is put on its difference from other embodiments. In particular, as the embodiments of the device are basically similar to the embodiments of the method, their description is relatively simple. For relevant content, reference may be made to the description of the embodiments of the method.

Persons of ordinary skill in the art can understand that all or part of the processes in the method for implementing the above embodiments can be completed by using a computer program to instruct the related hardware, and the program can be stored in a computer-readable storage medium. When executed, the program may include the process of the embodiments of each method as described above. The storage medium may be a magnetic disk, an optical disk, a Read-Only Memory (ROM) or a Random Access Memory (RAM).

The foregoing descriptions are merely some implementation manners of the present disclosure, but the protection scope of the present disclosure is not limited thereto, and the changes or replacements that any person skilled in the art can easily think of within the scope of the present disclosure should be within the scope of protection of the present disclosure. Therefore, the protection scope of the present disclosure shall be subject to the protection scope of the claims.

## Claims

1. A lighting fish attracting device, comprising a fixed support, a solar panel, a battery, a lamp, and at least one floating member that is configured to float on a water surface when in use, wherein
the fixed support and the battery are mounted on the at least one floating member; the solar panel and the lamp are mounted on the fixed support; the battery is connected to the lamp and the solar panel; and the lamp is located on a back side of the solar panel, and the back side is configured to face the water surface when in use.

2. The lighting fish attracting device according to claim 1, further comprising at least one cover board, wherein the at least one cover board is disposed on a mounting surface of the at least one floating member in one-to-one correspondence and covers the at least one floating member.

3. The lighting fish attracting device according to claim 2, wherein the fixed support and the battery are mounted on the at least one floating member respectively through the at least one cover board.

4. The lighting fish attracting device according to any one of claims 1-3, wherein the at least one floating member comprises one floating member, and a through window is provided in the one floating member; and
the lamp is located above the window; or
the lamp is located below the window, and is configured to be submerged in water when in use.

5. The lighting fish attracting device according to any one of claims 1-3, wherein the at least one floating member comprises at least two floating members; the at least two floating member enclose a space serving as a through window, and the fixed support is mounted on the at least two floating members; and
the lamp is located above the window; or
the lamp is located below the window, and is configured to be submerged in water when in use.

6. The lighting fish attracting device according to any one of claims 1-5, wherein each of the at least one floating member is a foam, a PC bucket or a floating bucket.

7. The lighting fish attracting device according to claims 1-3, 5 or 6, wherein the at least one floating member comprises at least two floating members; the battery is disposed on a surface of one floating member of the at least two floating members; and a volume of the one floating member is greater than a volume of each of at least one remaining floating member of the at least two floating members.

8. The lighting fish attracting device according to any one of claims 1-7, further comprising a position fixing member, wherein the position fixing member is connected to the fixed support, and is configured to fix the fixed support onto the water surface when in use.

9. The lighting fish attracting device according to claim 8, wherein the fixed support comprises a plurality of base frames, a plurality of cross beams and a plurality of vertical bars, and axis directions of the plurality of vertical bars are perpendicular to the mounting surface of the at least one floating member; the mounting surface of the at least one floating member comprises a plurality of first edges extending in a first direction and a plurality of second edges extending in a second direction, the first direction being different from the second direction;
each of the plurality of base frames wraps a corresponding first edge among the plurality of first edges in a one-to-one correspondence; a extending direction of the plurality of cross beams is the same as the second direction, and each of the plurality of cross beams is fixed on the plurality of base frames; a bottom end of each of the plurality of vertical bars is fixed on a corresponding base frame of the plurality of base frames in a one-to-one correspondence; and the solar panel is mounted on top ends of the plurality of vertical bars;
the position fixing member comprises at least one rope and at least one pulling net that is connected in one-to-one correspondence to one end of the at least one rope; an opposite end of the at least one rope is connected to a corresponding base frame of the plurality of base frames in a one-to-one correspondence.

10. The lighting fish attracting device according to claim 9, wherein the fixed support further comprises a lamp hanger and an upper frame disposed on the plurality of vertical bars; the lamp hanger is disposed on the upper frame, and the lamp is fixed on the lamp hanger.

11. The lighting fish attracting device according to claim 9, wherein each of the plurality of vertical bars has a first fixing surface and a second fixing surface; the first fixing surface is perpendicular to the second direction, and the second fixing surface is perpendicular to the first direction;
the fixed support further comprises a lateral diagonal bracing disposed on the first fixing surface; an upper end of the lateral diagonal bracing is connected to the first fixing surface, and a lower end of the lateral diagonal bracing is connected to one of the plurality of base frames;
the mounting surface of the floating member, the lateral diagonal bracing and one corresponding vertical bar of the plurality of vertical bars constitute a lateral triangular support structure;
the fixed support further comprises a longitudinal diagonal bracing disposed on the second fixing surface; an upper end of the longitudinal diagonal bracing is connected to the second fixing surface, a lower end of the longitudinal diagonal bracing is connected to one of the plurality of base frames, and the base frame, the longitudinal diagonal bracing and a vertical bar constitute a longitudinal triangular support structure.

12. The lighting fish attracting device according to claim 11, wherein each of the plurality of vertical bars also has a cross bar that is configured to connect two adjacent vertical bars of the plurality of vertical bars.

13. The lighting fish attracting device according to any one of claims 8-12, wherein the battery is mounted on one of the at least one floating member via the battery holder, and the battery holder is affixed to a base frame that wraps a first edge of a floating member of the at least one floating member.

14. The lighting fish attracting device according to any one of claims 1-13, wherein a panel surface of the solar panel is parallel to a mounting surface of each of the plurality of floating members; or
an angle between the panel surface of the solar panel and the mounting surface of each of the at least one floating member is greater than 0° and less than 90°.

15. The lighting fish attracting device according to any one of claims 1-14, wherein the battery comprises a rechargeable battery and a controller for controlling the rechargeable battery; an input end of the rechargeable battery is connected to the solar panel, and an output end of the rechargeable battery is connected to the lamp;
the controller is configured to control the rechargeable battery to charge the lamp when a light intensity is less than or equal to a light intensity threshold, and control the rechargeable battery to stop charging the lamp when the light intensity is greater than the light intensity threshold.

16. The lighting fish attracting device according to claim 15, wherein the controller is further configured to set a power supply strategy for the rechargeable battery to supply power to the lamp, and the power supply strategy includes a power supply duration and/or power supply power.

17. The lighting fish attracting device according to claim 15 or 16, wherein the controller is configured to delay t1 of time before controlling the rechargeable battery to charge the lamp when the light intensity is less than or equal to the light intensity threshold, and delay t2 of time before controlling the rechargeable battery to stop charging the lamp when the light intensity is greater than the light intensity threshold.

18. The lighting fish attracting device according to any one of claims 15-17, wherein the battery further comprises a display connected to the controller;
the controller is also configured to test a battery voltage of the rechargeable battery and/or a photovoltaic voltage of the solar panel, and
the display is configured to display the battery voltage of the rechargeable battery and/or the photovoltaic voltage of the solar panel when the battery voltage of the rechargeable battery and/or the photovoltaic voltage of the solar panel are being tested.

19. The lighting fish attracting device according to any one of claims 15-18, further comprising a remote control terminal, wherein, the remote control terminal is wirelessly connected to the controller and configured to wirelessly control the controller.
